# EUROPEAN PATENT APPLICATION

(11) **EP 1 810 795 A1**
(43) Date of publication of application: **25.07.2007**
(21) Application number: 06100618.5
(22) Date of filing: 19.01.2006
(51) Int. Cl.: B25J 19/06

(54) **Safety device for an industrial robot with elastic sealed bag comprising a fluid or gas**

(71) Applicant: ABB AB, 721 83 Västerås (SE)
(72) Inventor: Brogardh, Torgny, SE-724 79 Västeras (SE)

(57) **Abstract**

A safety device for an industrial robot comprising a manipulator and a control unit, which safety device comprises protecting means (16) arranged on at least a part of the manipulator and sensor means connected to the control unit. The protecting means (16) comprises at least one elastic sealed bag and means adapted to measure an increase in the internal pressure of the bag.

## Description

### TECHNICAL FIELD

The present invention relates to a device for an industrial robot. An industrial robot is defined to comprise a control unit and a manipulator.

### BACKGROUND OF THE INVENTION

An industrial robot system comprises a manipulator and a control unit and is programmed to carry out work or a work at least one cycle along an operating path. In order to program or teach the work cycle, the robot is manipulated to positions and orientation along the desired operating path. These positions are stored as instructions in a memory in the control unit. Other information, such as desired robot movement velocity, may also be stored in the memory. During operation of the robot, the program instructions are executed, thereby making the robot operate as desired. The operation is done by an operator either manually via a teach pendant unit, TPU, or automatically via the control unit. In the manual mode, it is possible for an operator to enter the vicinity of a robot. Thus, there are situations where it is necessary to control the interaction between a robot and an operator. Then, the object is to avoid collision between man and machine. Further, if a collision is unaviodable, the object is to minimize the injury of the operator.

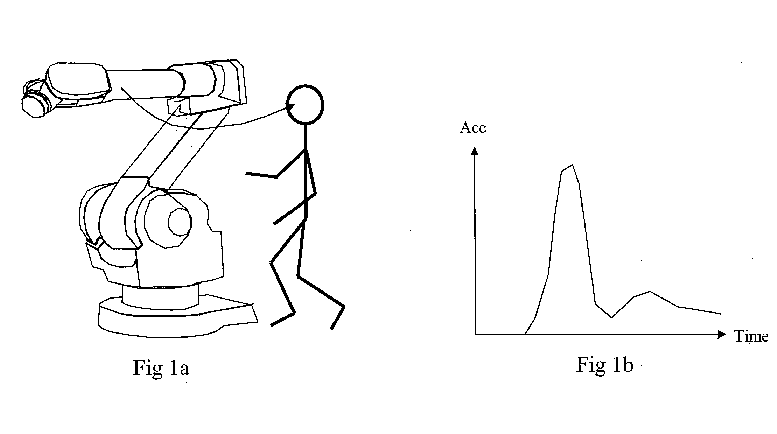

Figure 1a is a situation that may occur at robot cooperation between robot and human. The operator has activated a program that makes a fast movement against the head of him/her. The operator is busy with the teach pendant and does not react fast enough and the robot collides with the head of the operator. Since both the robot arms and the human head are very stiff with no damping layers, the head obtains a high acceleration peak in just a few milliseconds as seen in Figure 1b. This will give a high pressure between the brain and the skull and even if there is no skull fracture, serious brain bleeding will take place.

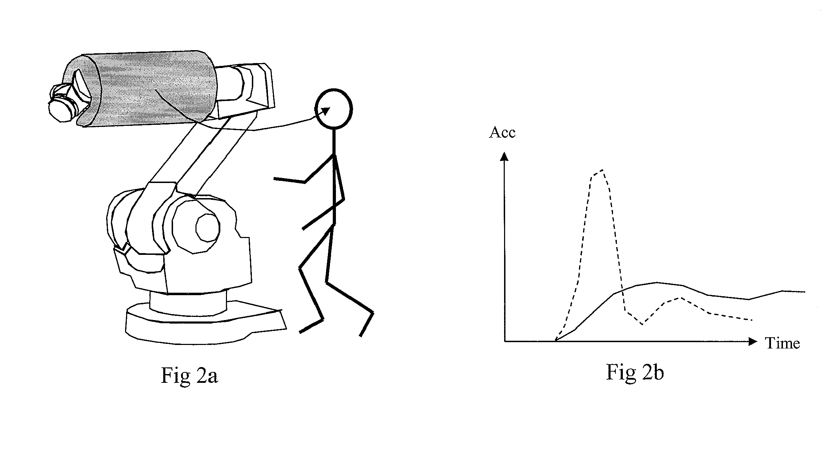

EP 1 323 503 teaches a safety device in particular for industrial robots. The device comprises a redundant combination of two different sensor systems, one touchless and one comprising optical waveguide, creating a tactile sensor system. Figure 2a shows the mentioned prior art solution, in which the upper arm of the robot has been covered by a soft material with good damping characteristics, which gives a much lower acceleration peak of the head and thus much smaller brain damage. However, the robot must stop as fast as possible when the collision takes place. To make this possible the skin of the soft material can be covered by sensors that are connected to the controller to stop and reverse the robot as soon as possible after the collision. This sensing of the collision can be made with capacitive electrodes, strain gauges, piezoelectric films, piezoelectric films, resistor network built into the soft material or contacts in biform skin layers.

These methods are very expensive and sometimes difficult to get robust.

### SUMMARY OF THE INVENTION

A first object of the invention is to provide a safety device which is relatively cheap. A second object of the invention is to provide a safety device, which is accurate, fast and robust.

These objects are achieved according to the invention in a first aspect with a safety device comprising the characteristic elements of claim 1, in a second aspect with a method of controlling the movements of the manipulator.

According to the first aspect, the invention provides a safety device for an industrial robot comprising a manipulator and a control unit. The safety device comprises protecting means arranged on at least a part of the manipulator and sensor means connected to the control unit. The protecting means comprises at least one elastic sealed bag. A fluid or gas is comprised under pressure in the at least one sealed bag. The sensor means comprises at least one pressure sensitive sensor arranged such that a change in pressure at any point of the surface of the at least one sealed bag is propagated to the at least one pressure sensitive sensor by the fluid or gas in the sealed bag.

General for the design of the protecting means is that it must be stiff enough and have enough damping properties to be able to transfer the speed and force of the robot to the human body without giving too high acceleration of the head or too high forces on the human tissues. This can be made with tube structures or air mattress structures.

Instead of using well defined structures for the gas or liquid, a more random structure can be used. An alternative is a sponge, which gives a protecting and damping layer on the robot with a low cost and very robust sensor technology that will sense a collision at any place on the soft material.

In order to compensate for changes in environment air pressure one reference pressure sensor can be placed outside the protecting means. When more than one sensor is installed in a protection bag, it will be possible to measure pressure gradients. Measuring pressure gradients gives more dynamic measurement information, which together with simple pressure measurement reduces the risk of incorrect measurement. Thus, the use of pressure gradients makes the detection more robust. Further, measuring pressure gradients eliminates the need of an extra sensor, which measures the environment air pressure outside the bag.

In this context, the feature "collision" is to be interpreted as any type of contact between a robot and an external body, taking place at any robot speed and with planned or unexpected robot motion. As a result, a protection means according to the invention can save the operator from being jammed with high force between for example the robot and a wall. As soon as the robot exerts a pressure against the operator the pressure inside the protection bag will increase and the robot will stop and reverse.

It should be noticed that the protecting means according to the invention can be used as a distributed emergency stop. This means that the operator can always be in such a position when he interacts with the robot that he can move at least one part of the body against the protection bag, which will stop the robot, when something unexpected takes place.

According to the invention, a pressure sensor signal can be fused with for example signals form accelerometer sensors on the robot arm system to increase the robustness of the detection of the emergency situation. Of course also sensor and control signals of the motor servos of the robot can be used to add information of the state of the robot when an increased pressure is detected in a protecting means.

The mounting of the protecting means should be very simple, just like mounting the type of protections that are used in industries with severe environment to protect the robot from dust, smoke and hot particles. When the protecting means are mounted, the alarm level of the pressure measurement is set, simply by pushing for example the hand against the bag comprised in the protecting means.

It is also considered to be comprised in the present invention, that the fluid or gas comprised in at least one elastic sealed bag is pressurized. Using a pressurized bag, results in less damping since the materials used are exposed to relatively higher elongation.

Using liquid in a bag, according to the invention, results in a higher damping when compared to using gas. Another result is the addition of weight to the robot arm.

### BRIEF DESCRIPTION OF THE DRAWING

The invention will be explained in greater detail, by description of embodiments, with reference to the accompanying drawing, wherein:
Figure 1a is an industrial robot and an operator,
Figure 1b illustrates a diagram showing acceleration versus time,
Figure 2a is prior art,
Figure 2b is a diagram showing acceleration versus time,
Figure 3a and 3b is an embodiment of the invention comprising a an elastic tube wound around the upper arm of the robot,
Figure 4a and 4b is an embodiment of the invention comprising an elastic bag comprising several cells connected to each other,
Figure 5a and 5b is an embodiment comprising an elastic bag with a spongy compartment,
Figure 6a is an embodiment of the invention comprising means for compensating changes in environmental air pressure,
Figure 6b is a measurement implementation of Figure 6a,
Figure 7 is an embodiment of the invention comprising means for measuring pressure differences,
Figure 8 is an embodiment of the invention comprising means for measuring pressure changes using a gas,
Figure 9 is an embodiment of the invention comprising means for measuring pressure changes using strain gauges,
Figure 10 is an embodiment of the invention comprising a tyre-tube type design of the bag,
Figure 11 is a diagram showing the measurement signal from a sensor supervising the protection bag.

### DESCRIPTION OF THE EMBODIMENTS

The following description relates to both the method and to the device.
A safety device 1 for an industrial robot 2, comprising a manipulator 3 and a control unit 4, comprises protecting means 5 arranged on at least a part 6 of the manipulator 3. The protecting means 5 comprises an elastic sealed bag 7 and a fluid 9 is comprised under pressure in the sealed bag 7. The safety device 1 further comprises a sensor means 9 comprising at least one pressure sensitive sensor 11 arranged such that a change in pressure at any point of the surface 7a of the sealed bag is transmitted to the at least one pressure sensitive sensor 11 by the pressurized fluid 8 in the sealed bag 7.

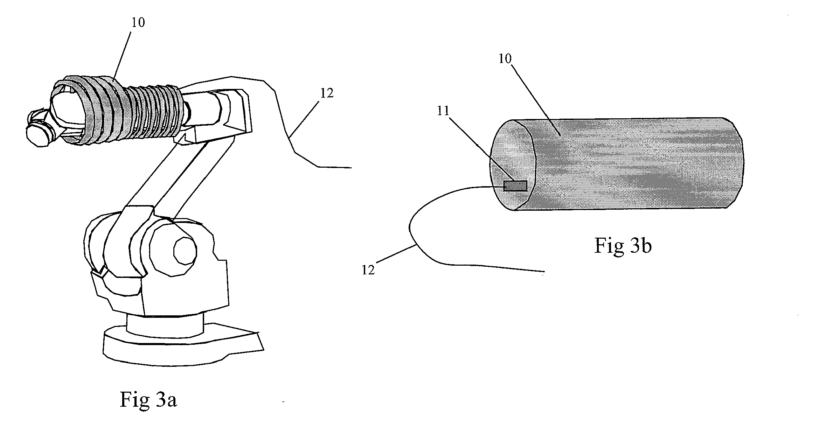

**Figure 3a** is one embodiment of the invention, in which the elastic sealed bag comprises an elastic tube 10, which has been wound around the upper arm 3a of the manipulator 3. The tube 10 is sealed and contains a gas or a liquid 8 under pressure. Inside the tube 10 there is at least one pressure sensor 11 that will react on a pressure increase at a collision. In **Figure 3b**, the pressure sensor 11 is arranged inside the tube 10 connected to the robot controller 4 through the wire 12.

Pressure sensors manufactured with MEMS structures for automobile applications are extremely cheap and since a low cost plastic tube containing air at pressure can be used, the whole arrangement will be very cheap.

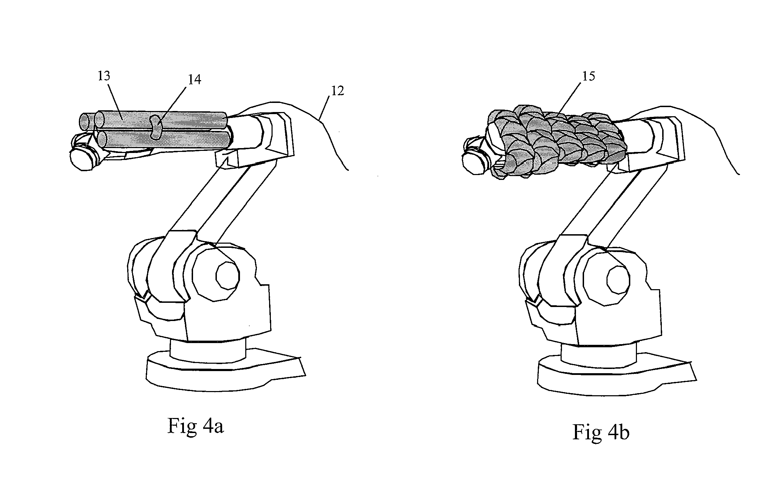

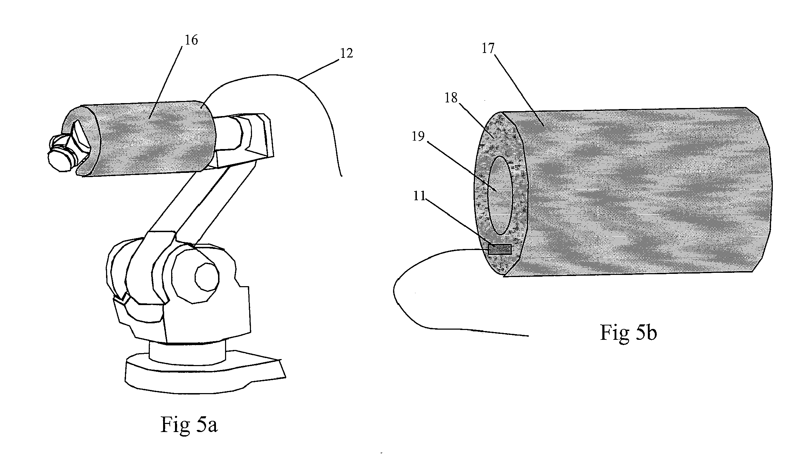

**Figure 4a** is an embodiment where the sealed bag 7 comprises several tubes 13 connected by communicating tubes 14, that are mounted along the robot arm. The communicating tubes 14 are used to propagate the pressure changes at a collision to the tube containing the pressure sensor. Since the pressure sensors 11 are very cheap it is possible to have one sensor in each tube 13, which will give a safety system redundancy. **Figure 4b** illustrates a protection bag design using the same kind of structure as for an air mattress. Thus the sealed bag 7 comprises several small cells 15 that are connected to each other and which together form a communicating air or a liquid system, the pressure of which will increase at collision. This is also illustrated in **Figures 5a and 5b.** The protection bag 16 comprises one outer skin 17 and one inner skin 19 and in between a spongy compartment 18 of for example plastics or rubber. The holes/cells in the porous material should be big enough to let the fluid (gas or liquid) 8 flow easily through the arrangement to increase the pressure at the place of the pressure sensor 11 when a collision takes place.

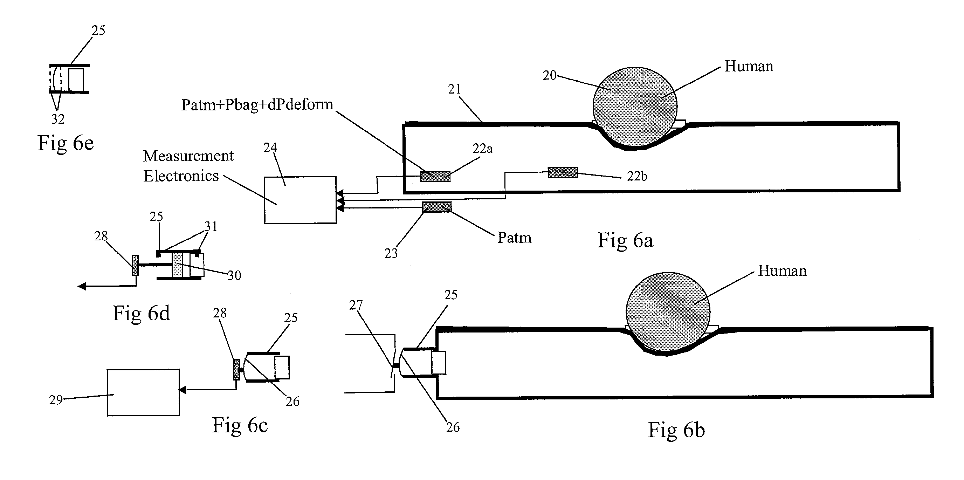

In order to compensate for changes in environment air pressure one reference pressure sensor 23 should be placed outside the protection bag 21, **Figure 6a.** When more than one sensor 22 is installed in the protection bag (22a and 22b in Figure 6a) it will be possible to measure pressure gradients and use these to make the detection more robust.

**Figure 6b** shows a measurement implementation using a simple membrane 26 which will bulge outwards when the pressure is increased in the protection bag. The membrane is here connected to an electric contact 27, which will open the emergency loop for the robot. Instead of an electric switch, a position or force sensitive sensor can be used to detect the membrane movements. Examples of such sensors are optical, capacitive, piezoresisitive, inductive, eddy current type and potentiometer type. Of course, more than one of these membranes can be implemented on the protection bag to detect pressure gradients.

Instead of a membrane a piston 30 in a cylinder 25 could be used, even if this means some friction, see **Figure 6d**. However, this friction could serve as a mechanical alarm level. To measure the piston movements a position sensor 28 is used. The piston 29 should have mechanical end stops 31, which also is needed for the membrane 26, for example with perforated walls 32 according to Figure 6e.

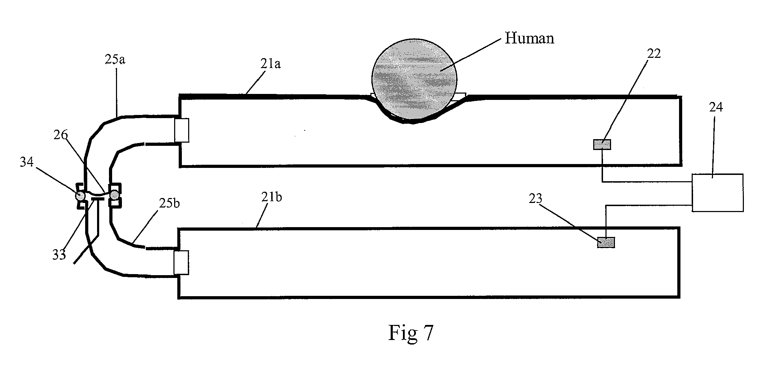

**Figure 7** is an embodiment comprising two protection bags 21 a and 21 b, each comprising a pressure sensor 22 and 23, respectively. The difference or quotient between the sensor signals is measured in unit 24. Figure 7 also comprises an alternative, a membrane is arranged separating the bags 21a and 21b and giving the possibility to measure the difference in compartment pressure. In Figure 7, the compartments 21a and 21b are connected by the tubes 25a and 25b having a tight connection 34 with the membrane 26. In this case, the membrane motion is measured using the capacitance between the membrane 26 and an electrode 33.

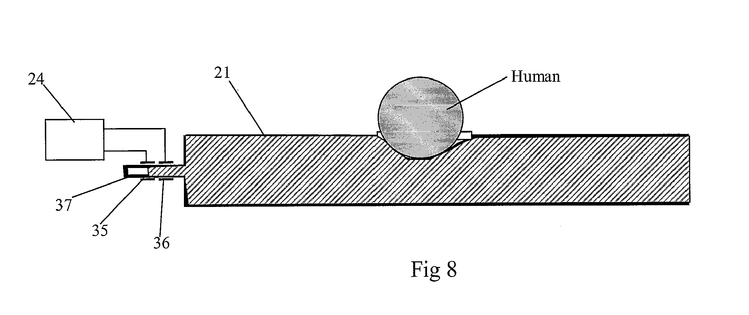

In the case that the protection bag 21 contains a fluid 8 all the measurement methods previously described can be used. It is then also possible to make use of a capillary menisc between the liquid and a gas to measure the fluid pressure. **Figure 8** is an embodiment comprising a capillary tube 37 containing air in its left end of the Figure. When the pressure in the protection bag 21 changes the interface between the liquid and the air will be moved and this can be measured by for example 2 cylindrical capacitor electrodes 35 and 36, connected to the measurement electronics 24. Alternative sensors types are for example optical or resisitive sensors. It is also possible to use a gas/liquid interface for measurements when the protection bag is filled with gas. In Figure 8, the striped region then will be the gas and the small white region in the capillary 37 will be a liquid.

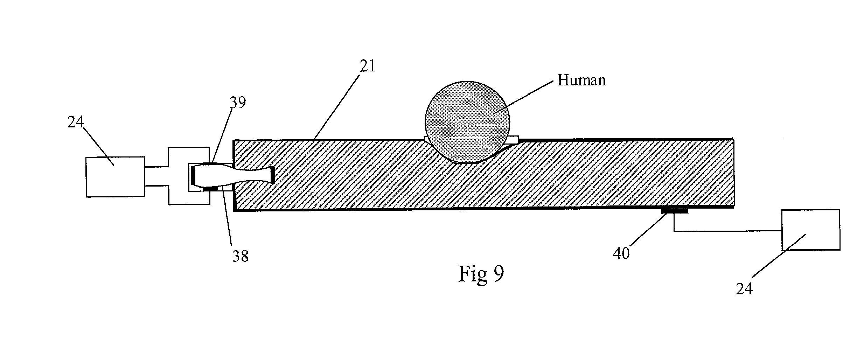

Instead of using the capillary effect a flexible tube 38 containing a gas (or even liquid) can be mounted in such a way that part of it is inside the protection bag and part of it is outside. When a collision takes place the increased pressure of the liquid will make the tube to contract on inner side and expand on the outer side. These movements can be measured either by a sensor on the inner side or on the outer side of the tube. In **Figure 9** the measurements are made on the outer side using strain gauges, which measure the strain in the walls of the measuring tubes. Other types of sensors can of course be used to measure the strain or movements of the measurement tube.

Strain gauges sensors 40 can also be mounted directly on the surface of the protection bag. To increase the sensitivity of such an arrangement the protection bag skin thickness can be reduced at the measurement site.

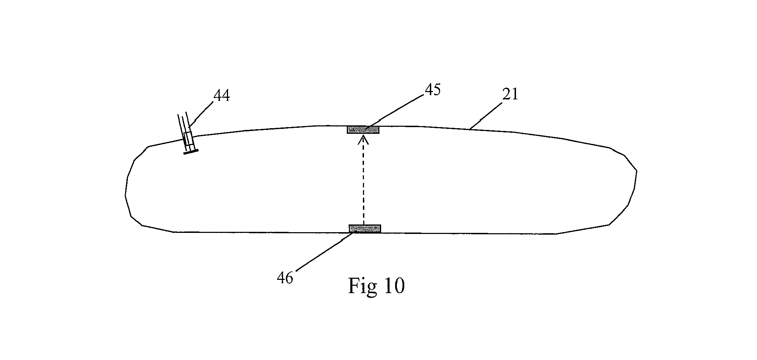

One way to obtain a good protection is to use a tyre-tube type design of the protection bag 21 as outlined in **Figure 10.** Air is pumped into the bag 21 through the valve 44 and a sensor arrangement is used to measure the pressure in the tube. One way to obtain a low cost sensor is to use the tyre pressure sensors that are used for automobile safety, developed after the Ford/Firestone accidents in the US. In one design of these sensors, MEMS pressure sensors are integrated into the valve and makes use of wireless transmission of the pressure signal. Another way of measuring the state of the protection bag is to use ultrasonic, as shown in Figure 10. This can be implemented with one transmitter 46 on one inner wall of the bag and one receiver 45 on another wall. As an alternative the ultrasonic element 46 can be used both as transmitter and receiver and then reflections in the inner walls of the bag are used. Alternatively, several reflections can be used to supervise several parts of the bag. The deformation of the bag caused by increased internal pressure at a collision is measured as changes in time of flight or in phase of the ultrasonic beam. Since ultrasonic is less attenuated in a liquid than in a gas, this method is best suited for a protection bag containing a liquid. Of course several other sensor types can be used for the internal measurements of deformation of the bag. For example optical and microwave measurement systems. It is also possible to use position sensors connected to bars or wires inside the bag.

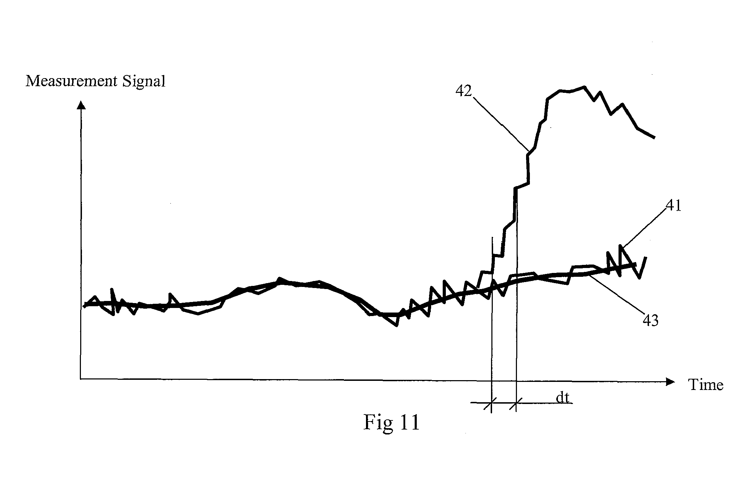

In **Figure 11** the graph 41 shows how the measurement signal from a sensor supervising the protection bag looks like. It has a low frequency component that depends on for example sensor drift and motions of the robot. It also has a high frequency component, which depends on such disturbances as robot vibrations and measurement noise. The graph 42 shows the measurement signal when a collision takes place and the time interval dt is the time needed for the supervision system to decide that a collision has taken place. In order to make this time as short as possible without sacrificing the risk of false alarms the measurement signals are filtered (see the graph 43). Slow signal variations with small derivative values are ignored and at first when the filtered derivative reaches a certain level the decision is taken that a collision has taken place. The filtering can be made more or less sophisticated with the simplest filter as a low pass filters and the more advanced using knowledge of the noise propertied and the dynamics of the system as in the case of Kalman filters. Models and measurement of the robot motion and models of the dynamics of the protection bag can also be used for model-based collision detection using for example residuals.

## Claims

1. A safety device (1) for an industrial robots (2) comprising a manipulator (3) and a control unit (4), which safety device comprises protecting means (5) arranged on at least a part of the manipulator (3a) and sensor means (9) connected to the control unit (4),
**characterized in that**
the protecting means (5) comprises at least one elastic sealed bag (7,16, 21),
a fluid (8) or gas is comprised in the at least one sealed bag (7,16, 21), and
the sensor means (9) comprises at least one sensor (11) arranged to detect/measure a change of internal pressure in the bag (7, 16, 21) due to deformation of the bag i.e. a collision.

2. A device according to claim 1, wherein the at least one sensor means (11) is arranged inside the sealed bag (7, 16, 21).

3. A device according to claim 2, wherein the at least one sensor means (11) is arranged in contact with the fluid or gas (8).

4. A device according to claim 2 or 3, wherein the at least one sensor (11) is pressure sensitive.

5. A device according to claim 3, wherein, the at least one sensor (45, 46) is adapted to use ultrasonic.

6. A device according to claim 4, wherein one reference pressure sensor 23 is arranged outside the protection bag 21.

7. A device according to claim 1, wherein the at least one sensor means (11) is arranged outside on the bag (7, 16, 21).

8. A device according to claim 7, wherein the sensor is a strain gauge sensor (40) arranged to measure the strain or movements of the sealed bag (21).

9. A device according to claim 1, wherein the at least one sealed bag (21) is designed as a tyre-tube with a valve (44).

10. A device according to claim 9, wherein the at least one sensor is integrated in the valve (44) and arranged to measure the pressure in the tube.

11. A device according to claim 10, wherein the sensor makes use of wireless transmission of the signal to the control unit.

12. A device according to claim 1, wherein a membrane (26) adapted to measure pressure differences is arranged separating two sealed bags (21a, 21b).

13. A device according to claim 1, wherein a tube 38 containing a gas (or even liquid) is arranged with a first part inside and a second part outside the protecting bag.

14. A method of controlling the movements of an industrial robot (2) comprising a manipulator (3) with a control unit (4) and a safety device (1) with protecting means (5), arranged on at least a part of the manipulator (3a), where the protection means comprises at least one elastic sealed bag (7, 16, 21), a fluid (8) comprised under pressure in the at least one sealed bag and sensor means (9) connected to the control unit (4) wherein the sensor means upon detecting/measuring an increased internal pressure in the bag (7,16, 21) sends a signal to the control unit (4) indicating a collision between the protecting means and an external object and the control unit stops the movement of the manipulator.

15. A method according to claim 13, wherein the at least two sensors (22a, 22b) comprised in the protection bag (21) are brought to detect/measure pressure gradients.

16. A method according to claim 13, wherein a membrane (26) separating two sealed bags (21 a, 21b) is brought to measure the difference in compartment pressure of the bags.

17. A method according to claim 7, wherein the increased pressure of the fluid will make the bag contract on one side and expand on the other side and the sensor is brought to measure the movements of the bag created by the contraction and expansion.

18. A device according to claim 1, wherein a tube 38 containing a gas (or even liquid) and arranged with a first part inside and a second part outside the protecting bag is, upon collision and increased pressure of the liquid, brought to contract on inner side and expand on the outer side and the movements are measured by a sensor on the inner side or on the outer side of the tube.

19. A method according to any of claims 14-18, wherein the signal is filtered.
